# EUROPEAN PATENT SPECIFICATION

(11) **EP 0 443 216 B1**
(45) Date of publication and mention of the grant of the patent: **11.08.1993**
(21) Application number: 90203258.0
(22) Date of filing: 12.12.1990
(51) Int. Cl.: B60J 7/057

(54) **Electric open roof construction**
Aufbau eines elektrischen Schiebedaches
Construction de toit ouvrant à moteur électrique

(30) Priority: 23.02.1990 NL 9000434
(43) Date of publication of application: 28.08.1991
(73) Proprietor: VERMEULEN-HOLLANDIA OCTROOIEN II B.V., NL-2031 EA Haarlem (NL)
(72) Inventor: Huyer, Johannes Nicolaas, NL-1991 BN Velserbroek (NL)
(74) Representative: Metman, Karel Johannes

(56) References cited:
- EP-A- 0 351 280
- CH-A- 421 535
- DE-A- 3 823 869
- DE-U- 7 629 034

## Description

The invention relates to an electric open roof construction for a vehicle having an opening in its fixed roof, comprising an adjustable closure means for selectively closing and exposing the opening in the fixed roof; a drive means movable by an electric motor and adapted to adjust the closure means; a reference means operatively connected to the drive means, wherein any position of said reference means corresponds to one particular position of the closure means and said reference means being provided with one or more switching means; and sensor means cooperating with the switching means of the reference means to recognize certain positions of the closure means for controlling the electric motor.

The recognition of particular positions of the closure means of the open roof construction is particularly important in order to be able to obtain additional operational possibilities for enhancing the operational comfort of the open roof construction. One example thereof is the integration of the open roof construction in a central lock system of a vehicle.

In a known open roof construction of the type mentioned in the preamble of claim 1 (see eg. DE-GM-7629034) there is used a cam disk as reference means, the cams of which serving as switching means and cooperating with a switch. The position of the switch is an indication of the position of the panel. The cam disk is driven by the electric motor through a reduction means such that the cam disk is rotated not more than one revolution during the movement of the closure means between its extreme positions. In this manner any position of the closure means corresponds to a certain position of the cam disk. The disadvantage of this structure is that as a consequence of the necessarily low circumferential speed of the cam disk the accuracy of the change-over of the switch by means of the cams and consequently the accuracy of the determination of certain positions is correspondingly low, and variations, plays and the like between the motor and the cam disk have a relatively big influence on the accuracy.

It is the object of the invention to provide an open roof construction of the type mentioned in the preamble, in which this disadvantage is removed in an effective way.

For this purpose the open roof construction according to the invention is characterized by an auxiliary reference means also operatively connected to the drive means, the reduction between the drive means and the auxiliary reference means being smaller than the reduction between the drive means and the reference means, and the auxiliary reference means being equipped with one or more further switching means also cooperating with the sensor means such that the sensor means detect a respective position only then when the switching means of both reference means activate the sensor means.

Due to the addition of an auxiliary reference means moving faster than the reference means it is, on the one hand, possible to maintain the univocal positions of the largely retarded reference means while, on the other hand, the switching accuracy is nevertheless improved due to the auxiliary reference means moving faster than the reference means. There are no speed limiting demands made on the movement of the auxiliary reference means; the transmission ratio and the position of the switching means should only be attuned to those of the reference means. The reference means thereby determines the switching position for determining the position of the panel, while the auxiliary reference means accurately determines the switching point.

It is an advantage if the reference means and the auxiliary reference means constist of rotary disks, wherein preferably the rotary disks are superimposed in a concentric way.

Rotary disks offer the advantage of a convenient drive, while they occupy only little room, certainly when they are superimposed in a concentric way. In principle it would of course also be possible to use reference means moving linear, or for instance a reference means moving linear and a rotating auxiliary reference means.

In the embodiment having concentrically superimposed rotary disks it is favourable when the sensor means consist of an optical detector and the switching means consist of apertures in the rotary disks, wherein respective apertures in both rotary disks are positioned on pitch circles having equal diameters.

An optical detection and switching system has the advantage of a high accuracy due to the absence of mechanical contacts which may cause wear.

The invention will hereafter be elucidated with reference to the drawing showing an embodiment of the invention by way of example.

Fig. 1 is a schematic plan view of a vehicle roof having an electric open roof construction according to the invention.

Fig. 2 is an enlarged sectional view along the line II-II of Fig. 1.

Fig. 3 is a perspective exploded view of the most important parts of the sectional view of Fig. 2.

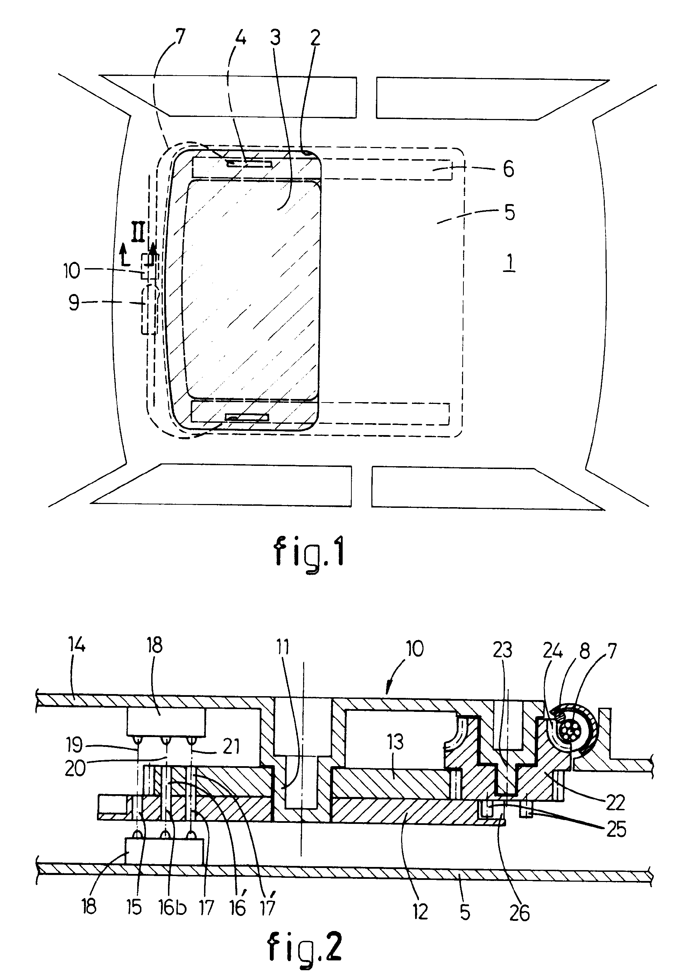

Fig. 1 shows in a schematic plan view an automobile roof 1 having a roof opening 2 therein. The embodiment of the electric open roof construction as shown is provided with a rigid panel 3 closing the roof opening 2 in its closed position and being movable from this closed position rearwardly below the fixed roof 1 in a slidable manner on the one hand, and to a backwardly and upwardly inclined ventilation position in a pivoting manner on the other hand. Naturally the invention can also be used in several other types of open roof constructions, such as spoiler roofs, open roofs having several panels or open roof constructions having other closure means than panels.

For adjusting the panel 3 of the open roof construction it is supported on either side by an adjustment means 4 being displaceable and adjustable within a longitudinal guide 6 mounted onto the frame 5. Each adjustment means 4 is driven by a pull and push cable 7. The pull and push cables 7 are provided with a helically wound thread 8 (see Fig. 2) with which a drive wheel of an electric motor 9 is engaged in order to displace the pull and push cable 7.

According to the invention the open roof construction comprises a device 10 for recognizing a number of specific positions of the panel 3, with which the electric motor 9 may be controlled.

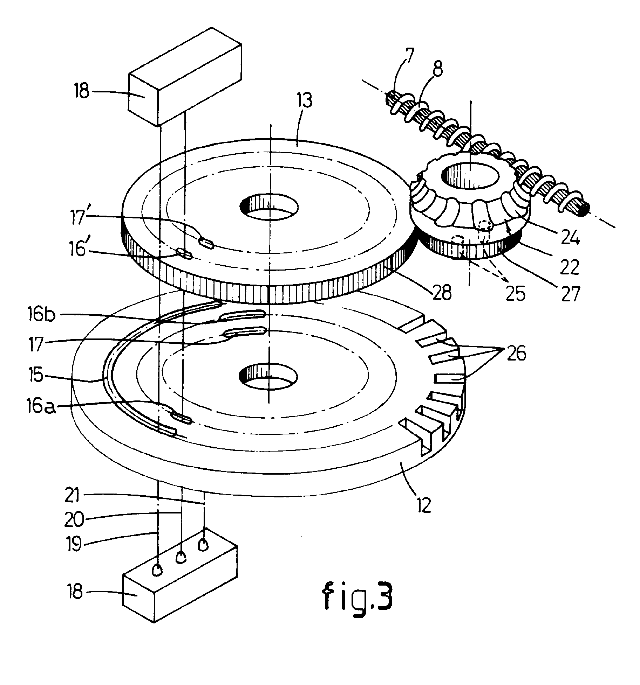

Fig. 2 and 3 show the most important parts of the device 10. The device 10 includes first of all two concentric rotary disks 12 and 13 being journalled on a common journal 11. The journal 11 is formed on a support 14 fixed to the frame 5. The first, and in this case lower, rotary disk 12 is provided with slots 15, 16a and b and 17 shaped as a segment of a circle and serving as switching means, while the second, upper rotary disk 13 comprises slots 16' and 17' being positioned on the same diameter as the respective slots 16 and 17 in the first rotary disk 12. The function of the slots 15, 16 and 17 serving as switching means will be elucidated furtheron.

An optical detector 18 consisting of a transmitter positioned on the frame 5 and a receiver provided on the support 14, which are placed on both sides of the rotary disks 12 and 13, has three light paths 19, 20 and 21, which may be blocked by the disks 12 and 13, or are allowed to pass through the respective slots 15, 16 and 17 in the rotary disks 12 and 13. The blocking and passage of the light paths effect a switching action with which the electric motor 9 can be controlled.

The lower rotary disk 12 and the upper rotary disk 13 are driven by a common transmission means 22 which is journalled about a journal 23 on the support 14 and has a special toothing 24 in engagement with the screw-thread 8 around the push and pull cable 7, such that a longitudinal sliding movement of the pull and push cable 7 causes a rotation of the transmission means 22.

The transmission means 22 is provided with downwardly projecting pins 25 which may alternately come into engagement with radial grooves 26 in the first rotary disk 12, the pins 25 and the grooves 26 together forming a kind of maltese cross for intermittently rotating the first rotary disk 12. The transmission means 22 further includes a rectilineal-face toothing 27 being in engagement with a similar toothing 28 on the outer circumference of the second rotary disk 13 to rotate the second rotary disk 13. The reduction between the transmission means 22 and the first rotary disk 12 is a number of times larger than the reduction between the transmission means 22 and the second rotary disk 13, so that the second rotary disk 12 rotates a number of times faster than the first rotary disk 12. The transmission between the pull and push cable 7 and the first rotary disk 12 through the transmission means 22 is thereby chosen such that a full adjustment of the pull and push cable 7 between its both of its extreme positions causes a rotation of the lower rotary disk 12 of no more than 360°. As a result thereof each rotary position of the first rotary disk 12 consequently corresponds to only one single position of the panel 3.

Regarding the meaning of the slots 15, 16 and 17 it is noted that in the embodiment shown by way of example they can indicate the following positions: slot 15 the tilted ventilating position of the panel 3, slot 16a the end of the ventilating position and possibly the end of the sliding position of the panel 3, and slot 16b and slot 17 the closed position of the panel 3. The several combinations of the transmitted and blocked light beams 19, 20 and 21 provide an univocal indication of the position of the panel 3. When for instance the light beams 19 and 21 are allowed to pass, then the panel 3 is in its extreme ventilating position, while the panel 3 is in its sliding position when all light beams 19, 20 and 21 are blocked.

As the second rotary disk 13 rotates a number of times, for instance five times, faster than the first rotary disk 12, which rotates one revolution at a maximum, the accuracy of a switching point, in the case shown at the end of the tilting and sliding movements of the panel and when the closed position thereof is obtained, will be determined by the rotational accuracy of the rotary disk 13. Only when the respective slots 16' and 17' are aligned with the respective slots 16 and 17 in the first rotary disk 12 and are aligned with the light beams 20 and 21 the particular position is detected and then it is for instance possible to produce a switching signal through a control circuit for stopping the electric motor 9.

## Claims

1. Electric open roof construction for a vehicle having an opening (2) in its fixed roof (1), comprising an adjustable closure means (3) for selectively closing and exposing the opening (2) in the fixed roof (1); a drive means (7, 8) movable by an electric motor (9) and adapted to adjust the closure means (3); a reference means (12) operatively connected to the drive means (7, 8), wherein any position of said reference means corresponds to one particular position of the closure means (3) and said reference means (7, 8) being provided with one or more switching means (15-17); and sensor means (18) cooperating with the switching means (15-17) of the reference means (12) to recognize certain positions of the closure means (3) for controlling the electric motor (9), **characterized** by an auxiliary reference means (13) also operatively connected to the drive means (7, 8), the reduction between the drive means (7, 8) and the auxiliary reference means (13) being smaller than the reduction between the drive means (7, 8) and the reference means (12), and the auxiliary reference means (13) being equipped with one or more further switching means (16', 17') also cooperating with the sensor means (18) such that the sensor means (18) detect a respective position only then when the switching means (16, 17, 16', 17') of both reference means (12, 13) activate the sensor means (18).

2. Electric open roof construction according to claim 1, wherein the reference means (12) and the auxiliary reference means (13) consist of rotary disks.

3. Electric open roof construction according to claim 2, wherein the rotary disks (12, 13) are superimposed in a concentric way.

4. Electric open roof construction according to claim 3, wherein the sensor means (18) consist of an optical detector and the switching means (16-18) consist of apertures in the rotary disks (12, 13), wherein respective apertures (16, 16'; 17, 17') in both rotary disks (12, 13) are positioned on pitch circles having equal diameters.

5. Electric open roof construction according to claim 4, wherein the reference means (12) and the auxiliary reference means (13) are driven by a common transmission means (22).

6. Electric open roof construction according to claims 3 and 5, wherein the common transmission means (22) is a multiple gear wheel means.

7. Electric open roof construction according to claim 6, wherein the common transmission means (22) is provided with a toothing (29) being in engagement with a pull and push cable (7) having screw-thread (8) and serving as drive means.

8. Electric open roof construction according to one of claims 5-7, wherein the rotary disk (12) and the transmission means (22) are in engagement with each other by means of a maltese cross.

## Patentansprüche

1. Elektrische Dachöffnungskonstruktion für ein Fahrzeug, das eine Öffnung (2) in seinem feststehenden Dach (1) aufweist, mit einer verstellbaren Verschlußeinrichtung (3) zum selektiven Schließen und Freigeben der Öffnung (2) in dem feststehenden Dach (1); einer von einem Elektromotor bewegbaren und zum Verstellen der Verschlußeinrichtung angepaßten Antriebseinrichtung (7, 8); einer Bezugseinrichtung (12), die wirkungsmäßig an die Antriebseinrichtung (7, 8) angeschlossen ist, wobui eine Position der Bezugseinrichtung einer bestimmten Position der Verschlußeinrichtung (3) entspricht und die Bezugseinrichtung (7, 8) mit einer oder mehr Schalteinrichtungen (15-17) versehen ist; und einer Fühlereinrichtung (18), die mit der Schalteinrichtung (15-17) der Bezugseinrichtung (12) zum Erkennen gewisser Positionen der Veschlußeinrichtung (3) zum Steuern des Elektromotors (9) zusammenwirkt, gekennzeichnet durch eine Hilfsbezugseinrichtung (13), die ebenfalls wirkungsmäßig an die Antriebseinrichtung (7, 8) angeschlossen ist, wobei die Untersetzung zwischen der Antriebseinrichtung (7, 8) und der Hilfsbezugseinrichtung (13) kleiner als die Untersetzung zwischen der Antriebseinrichtung (7, 8) und der Bezugseinrichtung (12) ist und die Hilfsbezugseinrichtung (13) mit einer oder mehreren zusätzlichen Schalteinrichtungen (16', 17') ausgerüstet ist, die ebenfalls mit der Fühlereinrichtung (18) zusammenwirken, derart, daß die Fühlereinrichtung (18) eine entsprechende Position nur dann abtastet, wenn die Schalteinrichtungen (16, 17, 16', 17') beider Bezugseinrichtungen (12, 13) die Fühlereinrichtung (18) aktivieren.

2. Elektrische Dachöffnungskonstruktion nach Anspruch 1, bei welcher die Bezugseinrichtung (12) und die Hilfsbezugseinrichtung (13) aus Drehscheiben bestehen.

3. Elektrische Dachöffnungskonstruktion nach Anspruch 2, bei welcher die Drehscheiben (12, 13) in konzentrischer Anordnung einander überlagern.

4. Elektrische Dachöffnungskonstruktion nach Anspruch 3, bei welcher die Fühlereinrichtung (18) einen optischen Fühler aufweist und die Schalteinrichtung (16, 17) Löcher in den Drehscheiben (12, 13) aufweist, wobei die entsprechenden Löcher (16, 16'; 17, 17') in beiden Drehscheiben (12, 13) auf Teilkreisen gleichen Durchmessers angeordnet sind.

5. Elektrische Dachöffnungskonstruktion nach Anspruch 4, bei welcher die Bezugseinrichtung (12) und die Hilfsbezugseinrichtung (13) von einer gemeinsamen Transmission (22) getrieben sind.

6. Elektrische Dachöffnungskonstruktion nach den Ansprüchen 3 und 5, bei welcher die gemeinsame Transmission (22) ein Rädergetriebe ist.

7. Elektrische Dachöffnungskonstruktion nach Anspruch 6, bei welcher die gemeinsame Transmission (22) mit einer Verzahnung (24) versehen ist, die in Eingriff mit einem Zug- und Druckkabel (7) steht, die ein Schraubgewinde (8) aufweist und als Antriebseinrichtung dient.

8. Elektrische Dachöffnungskonstruktion nach einem der Ansprüche 5-7, bei welcher die Drehscheibe (12) und die Transmission (22) über ein Malteserkreuz miteinander gekuppelt sind.

## Revendications

1. Construction de toit ouvrant électrique pour un véhicule ayant une ouverture (2) dans son toit fixe (1), comportant un moyen de fermeture réglable (3) pour sélectivement fermer et mettre à découvert l'ouverture (2) du toit fixe (1) ; un moyen d'entraînement (7, 8) pouvant être déplacé par un moteur électrique (9) et destiné à régler le moyen de fermeture (3) ; un moyen de référence (12) relié fonctionnellement au moyen d'entraînement (7, 8), de manière qu'une position quelconque dudit moyen de référence corresponde à une position particulière du moyen de fermeture (3) et ledit moyen de référence (7, 8) étant pourvu d'un ou plusieurs moyens de commutation (15-17) ; et un moyen capteur (18) coopérant avec les moyens de commutation (15-17) du moyen de référence (12) pour reconnaître certaines positions du moyen de fermeture (3) afin de commander le moteur électrique (9), caractérisée par un moyen de référence auxiliaire (13) également relié fonctionnellement au moyen d'entraînement (7, 8), la réduction entre le moyen d'entraînement (7,8) et le moyen de référence auxiliaire (13) étant plus petite que la réduction entre le moyen d'entraînement (7, 8) et le moyen de référence (12), le moyen de référence auxiliaire (13) étant équipé d'un ou plusieurs autres moyens de commutation (16', 17') coopérant aussi avec le moyen capteur (18) de manière que le moyen capteur (18) détecte une position respective uniquement lorsque les moyens de commutation (16, 17, 16', 17') des deux moyens de référence (12, 13) actionnent le moyen capteur (18).

2. Construction de toit ouvrant électrique selon la revendication 1, dans laquelle le moyen de référence (12) et le moyen de référence auxiliaire (13) comprennent des disques tournants.

3. Construction de toit ouvrant électrique selon la revendication 2, dans laquelle les disques tournants (12, 13) sont superposés d'une manière concentrique.

4. Construction de toit ouvrant électrique selon la revendication 3, dans laquelle le moyen capteur (18) est constitué d'un détecteur optique et les moyens de commutation (16-18) comprennent des ouvertures dans les disques tournants (12, 13), des ouvertures respectives (16, 16' ; 17, 17') dans les deux disques tournants (12, 13) étant placées sur des cercles primitifs ayant des diamètres égaux.

5. Construction de toit ouvrant électrique selon la revendication 4, dans laquelle le moyen de référence (12) et le moyen de référence auxiliaire (13) sont entraînés par un moyen commun (22) de transmission.

6. Construction de toit ouvrant électrique selon les revendications 3 et 5, dans laquelle le moyen commun (22) de transmission est un moyen à roues d'engrenage multiples.

7. Construction de toit ouvrant électrique selon la revendication 6, dans laquelle le moyen commun (22) de transmission est pourvu d'une denture (29) en prise avec un câble (7) de traction et de poussée ayant un filet de vis (8) et servant de moyen d'entraînement.

8. Construction de toit ouvrant électrique selon l'une des revendications 5 à 7, dans laquelle le disque tournant (12) et le moyen (22) de transmission sont en prise entre eux à l'aide d'une croix de Malte.
